# EUROPEAN PATENT APPLICATION

(11) **EP 4 804 306 A1**
(43) Date of publication of application: **09.09.2026**
(21) Application number: 24884082.9
(22) Date of filing: 02.08.2024
(51) Int. Cl.: H01M 50/179, H01M 50/543

(54) **BATTERY, ENERGY STORAGE APPARATUS, AND ELECTRIC DEVICE**

(30) Priority: 31.10.2023 CN 202322941873 U
(71) Applicant: BYD Company Limited, Shenzhen, Guangdong 518118 (CN)
(72) Inventor: ZHANG, Donghai, Shenzhen, Guangdong 518118 (CN); LIU, Yanchu, Shenzhen, Guangdong 518118 (CN); WU, Xuan, Shenzhen, Guangdong 518118 (CN); MU, Xiaowen, Shenzhen, Guangdong 518118 (CN); ZHOU, Guishu, Shenzhen, Guangdong 518118 (CN)
(74) Representative: Mathys & Squire
(86) International application number: PCT/CN2024/109453
(87) International publication number: WO 2025/092075

(57) **Abstract**

Provided is an electrical device, including an energy storage apparatus. The energy storage apparatus includes a battery. The battery includes a housing, a battery cell, electrode poles, and a reference electrode assembly. The battery cell is accommodated inside the housing, and the electrode poles are connected to the housing. One end of the reference electrode assembly is disposed between a positive electrode plate and a negative electrode plate of the battery cell, a reference post of the reference electrode assembly is connected to one of the electrode poles and is exposed outside the housing, and the reference electrode assembly is insulated from the battery cell and the electrode pole.

## Description

### CROSS-REFERENCE TO RELATED APPLICATIONS

This application claims priority to Chinese patent application No. 202322941873.X, filed on October 31, 2023 and entitled "BATTERY, ENERGY STORAGE APPARATUS, AND ELECTRICAL DEVICE", which is incorporated herein by reference in its entirety.

### TECHNICAL FIELD

This application relates to the field of energy storage technologies, and in particular, to a battery, an energy storage apparatus, and an electrical device.

### BACKGROUND

Conventional lithium-ion secondary batteries have only positive and negative electrodes, and have both energy transmission and signal transmission functions. However, in production practice, especially in fields such as large-scale integrated power, and energy storage, there is no reference potential, and respective potential states of positive and negative electrode plates of a battery cannot be independently monitored in real time, which is not conducive to intelligent control.

In the related technologies, for some batteries, a hole is separately drilled on a side surface, a bottom surface, or a top surface of a housing by breaking the housing of the battery, to lead out a reference electrode wire, thereby achieving a function of monitoring the potential states of the electrode plates. Drilling the holes in the housing damages the housing, damaging integrity of the housing, and affecting sealing reliability and strength of the housing.

### SUMMARY

An objective of this application is to provide a battery, an energy storage apparatus, and an electrical device to resolve the problems that drilling a hole in a housing for leading out a reference electrode wire damages integrity of the housing and affects sealing reliability and strength of the housing.

To achieve the objective of this application, this application provides the following technical solutions.

According to a first aspect, this application provides a battery, including: a housing, a battery cell, and electrode poles, the battery cell being accommodated inside the housing, and the electrode poles being connected to the housing; and a reference electrode assembly, one end of the reference electrode assembly being disposed between a positive electrode plate and a negative electrode plate of the battery cell, a reference post of the reference electrode assembly being connected to one of the electrode poles and being exposed outside the housing, and the reference electrode assembly being insulated from the battery cell and the electrode pole.

In one implementation, the electrode pole is provided with a wiring hole, the reference post includes a terminal, and the terminal is accommodated in the wiring hole.

In one implementation, the reference electrode assembly further includes an electrode wire, one end of the electrode wire is connected to the terminal, and the electrode wire extends between the positive electrode plate and the negative electrode plate of the battery cell.

In one implementation, the reference electrode assembly further includes an active portion, the active portion being located between the positive electrode plate and the negative electrode plate of the battery cell, and one end of the electrode wire away from the terminal being connected to the active portion.

In one implementation, the active portion is located in a middle region of the battery cell in a height direction of the housing; and/or the active portion is located in a middle region of the battery cell in a radial direction of the housing.

In one implementation, a portion of the electrode wire that is located between the positive electrode plate and the negative electrode plate of the battery cell is located in the middle region in the height direction of the housing.

In one implementation, an orthographic projection of the portion of the electrode wire that is located between the positive electrode plate and the negative electrode plate of the battery cell is a spiral line in the height direction of the housing.

In one implementation, the reference post further includes an insulating tube, the insulating tube passes through the wiring hole, an outer wall of the insulating tube is connected to an inner wall of the wiring hole, and the terminal is disposed at a center hole of the insulating tube.

In one implementation, the terminal extends out from an end portion of one side of the insulating tube that is located outside the housing.

In one implementation, the insulating tube further extends into a space enclosed by the battery cell, and at least a portion of the electrode wire is located in the center hole of the insulating tube.

In one implementation, at least a portion of the insulating tube extends out from an end portion of one side of the electrode pole that is located outside the housing.

In one implementation, an outer surface of the active portion is covered with an insulating film.

In one implementation, a material of the active portion includes any one of lithium metal, lithium-intercalated oxide, and lithium alloy, the lithium-intercalated oxide being any one of lithium titanate and lithium iron phosphate, and the lithium alloy being any one of lithium aluminum, lithium tin, and lithium bismuth.

In one implementation, the electrode poles include a positive electrode pole and a negative electrode pole, and one of the positive electrode pole and the negative electrode pole is provided with the wiring hole.

In one implementation, the battery is a cylindrical battery.

In one implementation, the battery cell is a wound battery cell.

According to a second aspect, this application further provides an energy storage apparatus, including a battery according to any one of implementations in the first aspect.

According to a third aspect, this application further provides an electrical device, including an electrical apparatus and the energy storage apparatus according to the second aspect, the energy storage apparatus supplying power to the electrical apparatus.

One end of the reference electrode assembly is disposed between the positive electrode plate and the negative electrode plate of the battery cell, and the reference post is connected to the electrode pole and is exposed outside the housing, to monitor a reference potential of the battery cell. The reference post of the reference electrode assembly is disposed by using an electrode pole of the battery, the reference post of the reference electrode assembly and the electrode pole of the battery are integrated, and only a region for accommodating both the reference post and the electrode pole needs to be reserved on the housing. The housing does not need to be provided with an additional hole for the reference post in addition to a hole for the electrode pole. Therefore, the structure is simple, and there is no need to drill a plurality of holes in the housing. This ensures the integrity of the housing and does not affect the sealing reliability and the strength of the housing.

### BRIEF DESCRIPTION OF DRAWINGS

To more clearly illustrate technical solutions in implementations of this application or in the prior art, the following briefly describes accompanying drawings required for describing the implementations or the prior art. It is clear that the accompanying drawings in the following description show merely some implementations of this application, and a person of ordinary skill in the art may still derive other drawings from these accompanying drawings without creative efforts.
FIG. 1 is a three-dimensional diagram of a battery according to an embodiment;
FIG. 2 is a longitudinal sectional view of a battery according to an embodiment; and
FIG. 3 is a transverse sectional view of a battery according to an embodiment.

### Reference numerals:

100: battery;
10: housing; 11: cylinder; 12: first end cap; 13: second end cap;
20: battery cell; 21: positive electrode plate; 22: separator; 23: negative electrode plate;
31: positive electrode tab; 32: negative electrode tab; 33: positive electrode pole; 331: wiring hole; 34: negative electrode pole;
40: reference electrode assembly; 41: terminal; 42: electrode wire; 43: active portion, 44: insulating tube; 441: center hole.

### DESCRIPTION OF EMBODIMENTS

The following clearly and completely describes the technical solutions in implementations of this application with reference to accompanying drawings in the implementations of this application. It is clear that the described implementations are merely some but not all of the implementations of this application. All other implementations obtained by a person of ordinary skill in the art based on the implementations of this application without creative efforts shall fall within the scope of protection of this application.

It will be noted that when an assembly is referred to as being "fastened" to another assembly, the assembly may be directly on another assembly or there may be an intermediate assembly. When an assembly is considered to be "connected" to another assembly, the assembly may be directly connected to another assembly or there may be an intermediate assembly at the same time.

Unless otherwise defined, all technical and scientific terms used in this application have the same meanings as commonly understood by a person of ordinary skill in the art to which this application belongs. Terms used in the specification of this application are only for the objective of describing specific embodiments and are not intended to limit this application. A term "and/or" as used in this application includes any and all combinations of one or more of associated listed items.

The following describes in detail some implementations of this application with reference to the accompanying drawings. In the absence of a conflict, the following embodiments and features in the embodiments may be combined with each other.

An embodiment of this application provides an electrical device, including an electrical apparatus and an energy storage apparatus according to an embodiment of this application. The electrical apparatus may be a household appliance load, an industrial electrical load, a commercial electrical load, an electric vehicle, or the like, specifically such as a home lighting system, a base station, or mechanical equipment. This is not limited. The energy storage apparatus is simple in structure, does not need hole drilling in a housing of a battery that damages integrity of the housing, and therefore provides high sealing reliability and overall reliability.

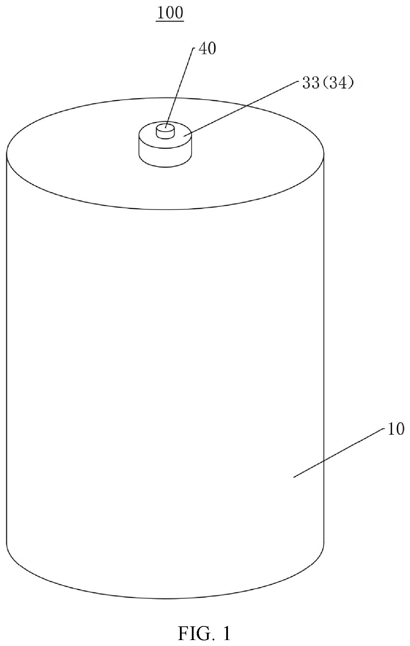

With reference to FIG. 1 to FIG. 3, an embodiment of this application provides an energy storage apparatus, including a battery 100 provided in an embodiment of this application. The energy storage apparatus may include a plurality of batteries 100 to form a battery pack. The energy storage apparatus may be used in a residential energy storage scenario, an electric vehicle scenario, a power grid scenario, and the like. In the residential energy storage scenario, for example, electricity generated by a photovoltaic panel of a user can be stored and supplied to a household appliance load of the user. In the electric vehicle scenario, for example, electricity charged by a charging pile can be stored and supplied to a motor of a vehicle and other drive mechanisms to drive the vehicle to travel. In the power grid scenario, for example, electricity produced during a power generation peak or a power consumption off-peak can be stored and electric energy is supplied to a power grid during a power generation off-peak or a power consumption peak, to achieve peak-shaving allocation of the electric energy and reducing power grid fluctuations.

The energy storage apparatus according to the embodiment of this application uses the battery 100 according to the embodiment of this application. One end of a reference electrode assembly 40 is disposed between a positive electrode plate 21 and a negative electrode plate 23 of a battery cell 20, and a reference post is connected to an electrode pole and is exposed outside a housing 10, to monitor a reference potential of the battery cell 20. The reference post of the reference electrode assembly 40 is disposed by using an electrode pole of the battery 100, the reference post of the reference electrode assembly 40 and the electrode pole of the battery 100 are integrated, and only a region for accommodating both the reference post and the electrode pole needs to be reserved on the housing 10. The housing 10 does not need to be provided with an additional hole for the reference post in addition to a hole for the electrode pole. Therefore, the structure is simple, and drilling a plurality of holes in the housing 10 is avoided. This ensures integrity of the housing 10, and does not affect sealing reliability and strength of the housing 10.

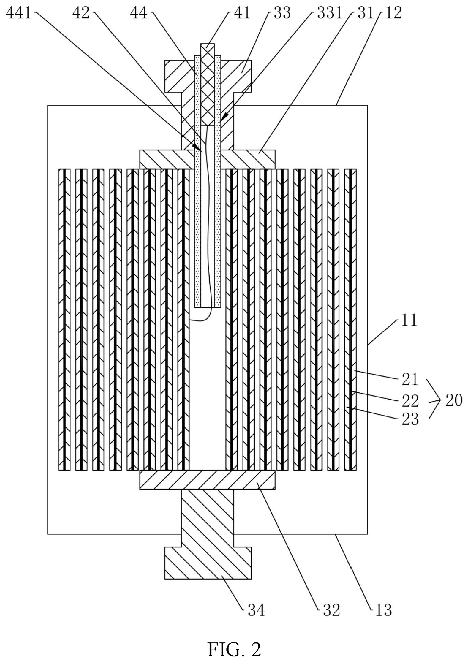

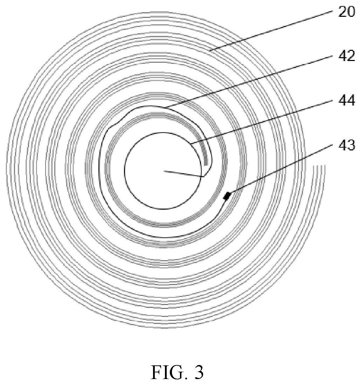

With reference to FIG. 1 to FIG. 3, FIG. 1 is a three-dimensional diagram of a battery according to an embodiment; FIG. 2 is a longitudinal sectional view of a battery according to an embodiment, namely a view of a longitudinal section; and FIG. 3 is a transverse sectional view of a battery according to an embodiment, namely a view of a transverse section. The housing 10 is omitted in FIG. 3. An embodiment of this application provides a battery 100, including a housing 10, a battery cell 20, electrode poles, and a reference electrode assembly 40.

The battery 100 may be a cylindrical battery, a square-case battery, a prismatic battery, or the like. This is not limited. Specifically, the housing 10 of the cylindrical battery is in a shape of a cylinder, the housing 10 of the square-case battery is in a shape of a cuboid, and the housing 10 of the prismatic battery is in a shape of a prism. The cylindrical battery shown in FIG. 1 and FIG. 2 is used as an example. The housing 10 includes a cylinder 11, a first end cap 12, and a second end cap 13. The first end cap 12 and the second end cap 13 close two ends of the cylinder 11. For the housing 10 in another shape, reference may be made to relevant literatures. The housing 10 may be made of an aluminum alloy, alloy steel, or any other feasible material. This is not limited. Optionally, the cylindrical battery is used as an example. An outer diameter of the housing 10 is 18 mm to 46 mm, and a height (namely a size along an axial direction of a cylinder) thereof is 65 mm to 80 mm.

The battery cell 20 is accommodated inside the housing 10. The battery cell 20 includes a positive electrode plate 21, a separator 22 and a negative electrode plate 23 stacked in sequence. The battery cell 20 may be manufactured by winding, stacking, or other assembly methods. A wound cylindrical battery is used as an example. The stacked positive electrode plate 21, separator 22 and negative electrode plate 23 are wound to form a cylindrical battery cell 20, to be accommodated in a cylindrical internal space of the housing 10. The positive electrode plate 21 may include a positive current collector (not shown in the drawings) and positive active materials (not shown the drawings) disposed on two surfaces of the positive current collector opposite to each other. The negative electrode plate 23 may include a negative current collector (not shown in the drawings) and negative active materials (not shown in the drawings) disposed on two surfaces of the negative current collector opposite to each other. The positive current collector is connected to a positive electrode tab 31, where the positive electrode tab 31 may be a partial structure extending out from the positive current collector, that is, the positive electrode tab 31 may also form an integral structure with the positive current collector. Certainly, the positive electrode tab 31 may also be connected to the positive current collector by welding or other methods. The negative current collector is connected to a negative electrode tab 32, wherein the negative electrode tab 32 may be a partial structure extending out from the negative current collector, that is, the negative electrode tab 32 may also form an integral structure with the negative current collector. Certainly, the negative electrode tab 32 may also be connected to the negative current collector by welding or other methods.

The electrode poles are generally columnar, and may be in shapes of cylinders or cylinders with steps. This is not limited. The electrode poles are connected to the battery cell 20 and are exposed outside the housing 10 from the end portions of the housing 10. The electrode poles may extend out from the housing 10, be flush with the housing 10, or be recessed relative to an outer surface of the housing 10. The electrode poles include a positive electrode pole 33 and a negative electrode pole 34. The positive electrode pole 33 and the negative electrode pole 34 may have the same shape and size, or different shapes and sizes. This is not limited. The positive electrode pole 33 runs through the first end cap 12 and is connected to the positive electrode tab 31, and the negative electrode pole 34 runs through the second end cap 13 and is connected to the negative electrode tab 32. Both the positive electrode pole 33 and the negative electrode pole 34 are exposed outside the housing 10, and are configured to connect to an external charging or electrical device. FIG. 2 shows an embodiment in which the positive electrode pole 33 and the negative electrode pole 34 are respectively disposed at the two ends of the housing 10. In another embodiment, the positive electrode pole 33 and the negative electrode pole 34 may also be disposed at the same end of the housing 10, and the corresponding positive electrode tab 31 and negative electrode tab 32 are also disposed at the same end of the housing 10. Optionally, outer diameters of the cylinders (namely the positive electrode pole 33 and negative electrode pole 34) of the electrode poles may be 5 mm to 30 mm, and heights (namely lengths in an axial direction) thereof may be 5 mm to 10 mm.

One end of the reference electrode assembly 40 is disposed between the positive electrode plate 21 and the negative electrode plate 23 of the battery cell 20, a reference post of the reference electrode assembly 40 is connected to an electrode pole and is exposed outside the housing 10, and the reference electrode assembly 40 is insulated from the battery cell 20 and the electrode pole. The specific structure of the reference electrode assembly 40 is not limited. The reference post may be exposed outside the housing 10 from an end portion of one end of the electrode pole that is located outside the housing 10. Specifically, the reference post may protrude from an end surface of one end of the electrode pole that is located outside the housing 10, be flush with the end surface of the one end of the electrode pole that is located outside the housing 10, or be recessed relative to the end surface of the one end of the electrode pole that is located outside the housing 10. The reference post may also be exposed outside the housing 10 from an outer peripheral surface of one end of the electrode pole that is located outside the housing 10, and may be protruding, flush, or recessed relative to the outer peripheral surface. This is not limited. The reference electrode assembly 40 is insulated from the battery cell 20 and the electrode pole, avoiding mutual interference between a normal charge and discharge signal of the battery 100 and a reference potential motoring signal of the reference electrode assembly 40 due to a short-circuit event. In this way, the battery 100 forms a three-electrode structure, namely a positive electrode of the positive electrode pole 33, a negative electrode of the negative electrode pole 34, and a reference potential monitoring electrode formed by the reference electrode assembly 40.

In use, the reference post being disposed at the positive electrode pole 33 is used as an example. An external charging device or electrical device charges the battery cell 20 or the battery cell 20 supplies power to the electrical device via the positive electrode pole 33 and the negative electrode pole 34. Meanwhile, a reference potential monitoring device is connected to the reference post to monitor a reference potential of the battery cell 20. The reference potential monitoring device may be manufactured together with the charging device and the electrical device to form an integrated interface, to be connected to the positive electrode pole 33 via a single interface, so that dual signal channel connection is achieved by means of single clamping, a testing work is simplified, and the testing convenience and the testing efficiency are improved; and meanwhile, fool proofing is achieved from a design stage, and mistaken connection by a tester is prevented. After the reference electrode assembly 40 monitors the reference potential of the battery cell 20, the positive and negative electrode potentials can be separately monitored in real time, and the states of the positive electrode plate 21 and the negative electrode plate 23 can be known, improving the readability of the battery 100 and facilitating promoting intelligent control in the field of large-scale integrated power and energy storage batteries. The electrode pole design that integrates a reference signal and a positive electrode signal (or a negative electrode signal) eliminates an exposed and movable reference electrode wire that is replaced with the reference electrode assembly 40 with a fixed shape, which is conducive to formation of a standardized three-electrode battery and facilitates promotion of the three-electrode battery.

In the embodiment of this application, one end of the reference electrode assembly 40 is disposed between the positive electrode plate 21 and the negative electrode plate 23 of the battery cell 20, and the reference post is connected to the electrode pole and is exposed outside the housing 10, to monitor the reference potential of the battery cell 20. The reference post of the reference electrode assembly 40 is disposed by using an electrode pole of the battery 100, the reference post of the reference electrode assembly 40 and the electrode pole of the battery 100 are integrated, and only the region for accommodating both the reference post and the electrode pole needs to be reserved on the housing 10. The housing 10 does not need to be provided with an additional hole for the reference post in addition to the hole for the electrode pole. Therefore, the structure is simple, and there is no need to drill a plurality of holes in the housing 10, which does not damage the housing 10. This ensures integrity of the housing 10, and does not affect the sealing reliability and the strength of the housing 10.

In one embodiment, with reference to FIG. 1 to FIG. 3, the electrode pole is provided with a wiring hole 331. In the embodiment of this application, for example, the positive electrode pole 33 is provided with the wiring hole 331, while the negative electrode pole 34 is not provided with the wiring hole 331. It will be understood that the negative electrode pole 34 may be provided with the wiring hole 331, while the positive electrode pole 33 is not provided with the wiring hole 331, that is, one of the positive electrode pole 33 and the negative electrode pole 34 is provided with the wiring hole 331. The wiring hole 331 extends along an axial direction of the electrode pole and runs through the electrode pole, so that an interior and an exterior of the housing 10 can be connected via the wiring hole 331. Optionally, one of the electrode poles (for example, the positive electrode pole 33) provided with the wiring hole 331 may be larger than the other electrode pole (for example, the negative electrode pole 34), to ensure sufficient strength.

The reference post includes a terminal 41, and the terminal 41 is accommodated in the wiring hole 331.

The terminal 41 is made of a conductive metal material, such as copper or aluminum. This is not limited. The terminal 41 is accommodated in the wiring hole 331 and is fixed relative to the electrode pole, to facilitate connection to the reference potential monitoring device. The terminal 41 is also insulated from the electrode pole, to avoid signal crosstalk caused by a short-circuit event. A diameter of the terminal 41 may be 2 mm to 20 mm, and a length of the terminal 41 extending out from the electrode pole may be 2 mm to 50 mm. The terminal 41 extends out from the electrode pole, so that the terminal 41 is more easily connected to the reference potential monitoring device to achieve signal acquisition.

The reference electrode assembly 40 further includes an electrode wire 42, one end of the electrode wire 42 is connected to the terminal 41, and the electrode wire 42 is disposed inside the battery cell 20 and extends between the positive electrode plate 21 and the negative electrode plate 23 of the battery cell 20. When the battery cell 20 is a wound battery cell, the electrode wire 42 can be wound along with the positive electrode plate 21 and the negative electrode plate 23. When the battery cell 20 is a stacked battery cell, the electrode wire 42 can be placed between the positive electrode plate 21 and the negative electrode plate 23 in a stacking process. The electrode wire 42 may be connected to one end of the terminal 41 located inside the wiring hole 331, or may be connected to any other position of the terminal 41. This is not limited.

The electrode wire 42 is made of a conductive metal material, such as copper or aluminum. The electrode wire 42 is a bendable structure and may be a metal wire, a metal strip, or the like. This is not limited. An outer surface of the electrode wire 42 may be covered with an insulating material, to avoid a short-circuit event caused by contact with the electrode pole, the battery cell 20, the housing 10, and the like. The electrode wire 42 being a metal wire is used as an example, and a diameter thereof may be 10 µm to 500 µm.

The reference electrode assembly 40 further includes an active portion 43, the active portion 43 is located between the positive electrode plate 21 and the negative electrode plate 23 of the battery cell 20, and one end of the electrode wire 42 away from the terminal 41 is connected to the active portion 43.

The active portion 43 is made of a conductive metal material, and a material of the active portion 43 includes any one of lithium metal, lithium-intercalated oxide, and lithium alloy, the lithium-intercalated oxide being any one of lithium titanate and lithium iron phosphate, and the lithium alloy being any one of lithium aluminum, lithium tin, and lithium bismuth. The active portion 43 is located between the positive electrode plate 21 and the negative electrode plate 23 inside the battery cell 20. Capacitors are formed between the active portion 43 and the positive electrode plate 21 and the negative electrode plate 23. By monitoring a signal of the active portion 43, a reference potential can be monitored, to achieve separate real-time monitoring of the positive and negative electrode potentials and know the states of the positive electrode plate 21 and the negative electrode plate 23. Optionally, an outer surface of the active portion 43 is covered with an insulating film. The material of the insulating film is not limited. The insulating film is disposed, so that the active portion 43 is separated from the positive electrode plate 21 and the negative electrode plate 23, avoiding a short-circuit event caused by direct contact.

In one embodiment, with reference to FIG. 2 and FIG. 3, the active portion 43 is located in a middle region of the battery cell 20 in a height direction of the housing 10 (for example, an axial direction of a cylindrical battery). Electrical activities of the positive electrode plate 21 and the negative electrode plate 23 at this position can more accurately reflect a potential situation of the entire battery cell 20. The active portion 43 is disposed at this position, so that the reference potential of the battery cell 20 can be monitored more accurately. Optionally, the active portion 43 is located in a middle region of the battery cell 20 in a radial direction of the housing 10. The active portion 43 is disposed at this position mainly to more accurately monitor the reference potential of the battery cell 20.

Optionally, the battery cell 20 being a wound battery cell is used as an example. The electrode wire 42 is wound from the middle region of the battery cell 20 in the height direction of the housing 10, along with the positive electrode plate 21 and negative electrode plate 23 of the battery cell 20. That is, the electrode wire 42 first extends to a middle region in a height direction of an innermost circle of the battery cell 20, and is then wound along with the battery cell 20. A portion of the electrode wire 42 wound along with the battery cell 20 is roughly located on a same plane. In other words, a portion of the electrode wire 42 that is located between the positive electrode plate 21 and the negative electrode plate 23 of the battery cell 20 is located in the middle region in the height direction of the housing 10. In this way, a length of the electrode wire 42 can be reduced, and winding of the battery cell 20 is also facilitated.

It will be understood that for a stacked battery cell, a portion of the electrode wire 42 that is located between the positive electrode plate 21 and the negative electrode plate 23 of the battery cell 20 is similarly located in the middle region in the height direction of the housing 10.

Optionally, an orthographic projection of the portion of the electrode wire 42 that is located between the positive electrode plate 21 and the negative electrode plate 23 of the battery cell 20 is a spiral line in the height direction of the housing 10. For the wound battery cell, the spiral line is roughly a circular spiral line. For the stacked battery cell, the spiral line can be a flat spiral line. In this way, the electrode wire 42 is wound along with the battery cell 20 or stacked between the positive electrode plate 21 and the negative electrode plate 23 of the battery cell 20, so that manufacturing is convenient and the structural stability is good.

In one embodiment, with reference to FIG. 2 and FIG. 3, the reference post further includes an insulating tube 44, the insulating tube 44 passes through the wiring hole 331, an outer wall of the insulating tube 44 is connected to an inner wall of the wiring hole 331, and the terminal 41 is disposed at a center hole 441 of the insulating tube 44. Optionally, the terminal 41 extends out from an end portion of one side of the insulating tube 44 that is located outside the housing 10.

The insulating tube 44 is a tubular structure extending along a straight line, and the center hole 441 thereof runs through two ends in a straight-line direction. A wall thickness of the insulating tube 44 is not limited, and a diameter of the center hole 441 thereof is determined on the basis of the diameter of the terminal 41. The insulating tube 44 is made of an insulating material, such as plastic or an insulating film, and can be a rigid or flexible structure, with no limitation. The outer wall of the insulating tube 44 can be connected to the inner wall of the wiring hole 331 by means of bonding, interference fit, or the like. This is not limited. The insulating tube 44 is fastened to the electrode pole and is configured to provide a mounting base for the terminal 41. The terminal 41 can be fastened to the center hole 441 of the insulating tube 44 by means of bonding, interference fit, or the like, so that the terminal 41 is mounted and fastened to the electrode pole, and the terminal 41 is insulated from the electrode pole.

The insulating tube 44 is disposed, so that the terminal 41 can be mounted and fastened to the electrode pole and insulated therefrom by means of a simple structure, achieving a simple structure, easy mounting and low costs.

Optionally, when the battery cell 20 is a wound battery cell, the insulating tube 44 further extends into a space enclosed by the battery cell 20, and at least a portion of the electrode wire 42 is located in the center hole 441 of the insulating tube 44. After the positive electrode plate 21, the separator 22 and the negative electrode plate 23 are wound, a space is formed at a center position, and the space can accommodate the insulating tube 44. In this way, at least a portion of the electrode wire 42 extends inside the center hole 441, that is, the insulating tube 44 also provides a portion of a wiring space for the electrode wire 42, so that a function of preventing the electrode wire 42 from short-circuiting with the battery cell 20 can be achieved. Optionally, the electrode poles are disposed at centers of the end caps, that is, the positive electrode pole 33 is located at the center of the first end cap 12, and the negative electrode pole 34 is located at the center of the second end cap 13. The insulating tube 44 passes through the positive electrode pole 33 and extends into the space enclosed by the battery cell 20 inside the housing 10. The insulating tube 44 can act as a winding core for the battery cell 20, that is, the positive electrode plate 21, the separator 22 and the negative electrode plate 23 can be wound around the insulating tube 44. A length of the insulating tube 44 extending into the housing 10 is not limited. Optionally, an end portion of the insulating tube 44 that extends into the housing 10 roughly corresponds to the middle region of the battery cell 20 in the height direction of the housing 10. In this way, the electrode wire 42 extending out from the insulating tube 44 can directly start to be wound along with the battery cell 20, and does not need to extend along the height direction of the housing 10, thus reducing a short-circuit risk between the electrode wire 42 and the battery cell 20.

Otherwise optionally, for a stacked battery cell or other types of battery cells, similarly, a space is enclosed by the battery cell 20, and the insulating tube 44 extends into the space. This is not limited.

Optionally, with reference to FIG. 2, at least a portion of the insulating tube 44 extends out from an end portion of one side of the electrode pole that is located outside the housing 10. In this way, an insulating effect between the terminal 41 and the electrode pole can be improved, and the short-circuit risk is further reduced.

In description of the embodiments of this application, it will be noted that an orientation or a positional relationship indicated by the term "center", "upper", "lower", "left", "right", "vertical", "horizontal", "inner", "outer", "circumferential", or the like is an orientation or a positional relationship shown in the accompanying drawings, is only intended to facilitate describing this application and simplify the description, but is not intended to indicate or imply that an apparatus or element in question must have a specific orientation and must be constructed and operated in a specific orientation. Therefore, such a term cannot be construed as a limitation on this application.

The foregoing disclosure is only a preferred embodiment of this application, and certainly cannot be used to limit the scope of rights of this application. A person of ordinary skill in the art can understand that all or part of flows for implementing the foregoing embodiment, and equivalent changes made according to the claims of this application still fall within the scope covered by this application.

## Claims

1. A battery (100), comprising:
a housing (10), a battery cell (20), and electrode poles, the battery cell (20) being accommodated inside the housing (10), and the electrode poles being connected to the housing (10); and
a reference electrode assembly (40), one end of the reference electrode assembly (40) being disposed between a positive electrode plate (21) and a negative electrode plate (23) of the battery cell (20), a reference post of the reference electrode assembly (40) being connected to one of the electrode poles and being exposed outside the housing (10), and the reference electrode assembly (40) being insulated from the battery cell (20) and the electrode pole.

2. The battery (100) according to claim 1, the electrode pole being provided with a wiring hole (331), the reference post comprising a terminal (41), and the terminal (41) being accommodated in the wiring hole (331).

3. The battery (100) according to claim 2, the reference electrode assembly (40) further comprising an electrode wire (42), one end of the electrode wire (42) being connected to the terminal (41), and the electrode wire (42) extending between the positive electrode plate (21) and the negative electrode plate (23) of the battery cell (20).

4. The battery (100) according to claim 3, the reference electrode assembly (40) further comprising an active portion (43), the active portion (43) being located between the positive electrode plate (21) and the negative electrode plate (23) of the battery cell (20), and one end of the electrode wire (42) away from the terminal (41) being connected to the active portion (43).

5. The battery (100) according to claim 4, the active portion (43) being located in a middle region of the battery cell (20) in a height direction of the housing (10); and/or the active portion (43) being located in a middle region of the battery cell (20) in a radial direction of the housing (10).

6. The battery (100) according to claim 4 or 5, a portion of the electrode wire (42) that is located between the positive electrode plate (21) and the negative electrode plate (23) of the battery cell (20) being located in the middle region of the battery cell (20) in the height direction of the housing (10).

7. The battery (100) according to claim 4 or 6, an orthographic projection of the portion of the electrode wire (42) that is located between the positive electrode plate (21) and the negative electrode plate (23) of the battery cell (20) being a spiral line in the height direction of the housing (10).

8. The battery (100) according to any one of claims 3 to 7, the reference post further comprising an insulating tube (44), the insulating tube (44) passing through the wiring hole (331), an outer wall of the insulating tube (44) being connected to an inner wall of the wiring hole (331), and the terminal (41) being disposed at a center hole (441) of the insulating tube (44).

9. The battery (100) according to claim 8, the terminal (41) extending out from an end portion of one side of the insulating tube (44), the side being located outside the housing (10).

10. The battery (100) according to claim 8 or 9, the insulating tube (44) further extending into a space enclosed by the battery cell (20), and at least a portion of the electrode wire (42) being located in the center hole (441) of the insulating tube (44).

11. The battery (100) according to any one of claims 8 to 10, at least a portion of the insulating tube (44) extending out from an end portion of one side of the electrode pole, the side being located outside the housing (10).

12. The battery (100) according to any one of claims 4 to 7, an outer surface of the active portion (43) being covered with an insulating film.

13. The battery (100) according to any one of claims 4 to 7, a material of the active portion (43) comprising any one of lithium metal, lithium-intercalated oxide, and lithium alloy, the lithium-intercalated oxide being any one of lithium titanate and lithium iron phosphate, and the lithium alloy being any one of lithium aluminum, lithium tin, and lithium bismuth.

14. The battery (100) according to any one of claims 2 to 13, the electrode poles comprising a positive electrode pole and a negative electrode pole, and one of the positive electrode pole and the negative electrode pole is provided with the wiring hole (331).

15. The battery (100) according to any one of claims 1 to 14, the battery (100) being a cylindrical battery.

16. The battery (100) according to any one of claims 1 to 14, the battery cell (20) being a wound battery cell.

17. An energy storage apparatus, comprising the battery (100) according to any one of claims 1 to 16.

18. An electrical device, comprising an electrical apparatus and the energy storage apparatus according to claim 17, the energy storage apparatus supplying power to the electrical apparatus.
